# EUROPEAN PATENT APPLICATION

(11) **EP 2 837 994 A2**
(43) Date of publication of application: **18.02.2015**
(21) Application number: 14180977.2
(22) Date of filing: 14.08.2014
(51) Int. Cl.: G06F 3/023, G06F 3/0488

(54) **Methods and devices for providing predicted words for textual input**

(30) Priority: 16.08.2013 US 201313968607
(71) Applicant: BlackBerry Limited, Waterloo, ON N2K 0A7 (CA)
(72) Inventor: Stonehouse, Noel John Orland, Waterloo, Ontario N2L 3W8 (CA); Fyke, Steven Henry, Waterloo, Ontario N2L 3W8 (CA)
(74) Representative: Boyce, Conor

(57) **Abstract**

A computer-implemented method for use in an electronic device includes obtaining a set of candidate words without character-based input. A display of the electronic device displays a first virtual keyboard that presents a first subset of the candidate words and information identifying a plurality of categories associated with the candidate words. The first subset of the candidate words is associated with a first one of the categories. A first input indicative of at least one of a selection of a second one of the categories is received, and a second subset of candidate words is identified based on the received input. The display of the electronic device displays a second virtual keyboard presenting the second subset of the candidate words.

## Description

### FIELD

This application generally relates to methods and devices for providing predicted words for textual input.

### BACKGROUND

Increasingly, electronic devices, such as computers, laptops, netbooks, cellular phones, smart phones, personal digital assistants, tablets, etc., include touch-sensitive display screens (e.g., touchscreens) that allow a user to input characters into various application programs, such as word processor or e-mail applications, using a stylus or a fingertip. The entry of characters in a touchscreen can, however, represent a cumbersome and inefficient task due to, for example, a size of the touchscreen, especially when the user must input large numbers of characters in short time periods. Various predictive techniques attempt to alleviate the inefficiencies of character-based input by predicting words that the user is likely to next enter in the touchscreen. The combination of character-based and word-based input techniques, however, imposes a frustrating cognitive load on the user, who must mentally switch between the two input strategies.

### BRIEF DESCRIPTION OF THE DRAWINGS

**FIG. 1** is a block diagram of an electronic device, according to an example embodiment.
**FIG. 2** is an example flowchart illustrating a method for providing intelligent predictive text input, according to an example embodiment.
**FIG. 3** illustrates an example graphical user interface, according to an example embodiment.
**FIGs. 4A-4G** illustrate example graphical user interfaces that provide intelligent predictive text input, according to an example embodiment.

### DETAILED DESCRIPTION

Reference will now be made in detail to the disclosed example embodiments, which are illustrated in the accompanying drawings. Wherever possible, the same reference numbers will be used throughout the drawings to refer to the same or like parts.

The present disclosure relates to an electronic device, such as a wired communication device, e.g., a laptop computer, or a wireless communication device such as a cellular phone, smartphone, wireless organizer, personal digital assistant, gaming console, netbook, wirelessly enabled notebook computer, tablet computer, or a similar device. The electronic device can also be an electronic device without wireless communication capabilities, such as a handheld electronic game device, digital photograph album, digital camera, a tablet computer, or other device.

Predictive solutions are provided to assist with input on electronic devices during word entry or editing operations. These solutions include identifying, without character-based input from a user, a continuum of candidate words that could be next entered in a graphical user interface (GUI) by the user. The candidate words are, in some embodiments, assigned rankings and subsequently assigned to corresponding ones of a plurality of categories. Further, in some embodiments, a portion of the candidate words that correspond to a first one of the categories is displayed within the GUI, along with information identifying the categories to which the candidate words are assigned. The GUI enables to user to navigate not only through the portion of the candidate words assigned to the first category, but also to navigate through and view candidate words assigned to other categories. Upon selection of a candidate word, either associated with the first category or with a second one of the categories, the selected candidate word can be displayed within a corresponding display region of the GUI without requiring character-based input. In this way, embodiments consistent with this disclosure overcome the shortcomings associated with touchscreen input processing and facilitates the quick and accurate input of words and portions of words in electronic devices.

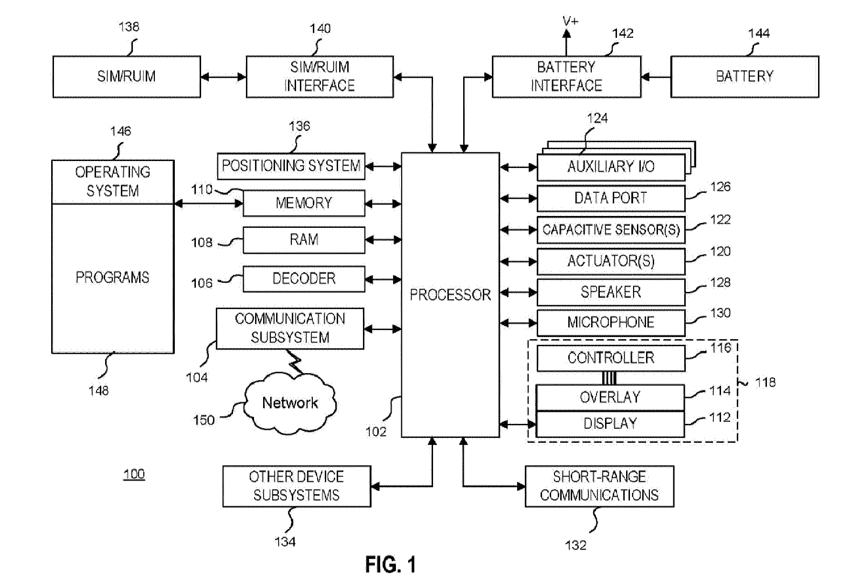

**FIG. 1** is a block diagram of an electronic device 100, according to an example embodiment. Electronic device 100 includes multiple components, such as a processor 102 that controls the overall operation of electronic device 100. Communication functions, including data and voice communications, are performed through an optional communication subsystem 104. Data received by electronic device 100 is decompressed and decrypted by a decoder 106. Communication subsystem 104 receives messages from and sends messages to a network 150. Network 150 is any type of network, including, but not limited to, a wired network, a data wireless network, a voice wireless network, or a dual-mode wireless network that supports both voice and data communications. In some embodiments, electronic device 100 is a battery-powered device, in which case it includes a battery interface 142 for receiving one or more batteries 144.

Processor 102 is coupled to and can interact with additional subsystems such as a Random Access Memory (RAM) 108; a memory 110, such as a hard drive, CD, DVD, flash memory, or a similar storage device; one or more actuators 120; one or more capacitive sensors 122; an auxiliary input/output (I/O) subsystem 124; a data port 126; a speaker 128; a microphone 130; a short-range communications subsystem 132; other device subsystems 134; and a touchscreen 118.

Touchscreen 118 includes a display 112 with a touch-active overlay 114 (or other similar touch input interface) connected to a controller 116. User interaction with a graphical user interface (GUI), such as a virtual keyboard rendered on display 112 for input of characters, an interface having regions for entry and display of handwritten characters and shapes, or a web browser, is performed through touch-active overlay 114. Processor 102 interacts with touch-active overlay 114 via controller 116. Characters, such as text, symbols, images, and other items are displayed on display 112 of touchscreen 118 via processor 102. Characters are input into electronic device 100 using a keyboard (not shown in **FIG. 1**), such as a physical keyboard having keys that are mechanically actuated, or a virtual keyboard having keys displayed on display 112.

Touchscreen 118 is connected to and controlled by processor 102. Accordingly, detection of a touch event and determining the location of the touch event is performed by processor 102 of electronic device 100. A touch event includes, for example, a tap by a finger, a swipe by a finger, a swipe by a stylus, a long press by finger or stylus, or a press by a finger for a predetermined period of time, and the like.

Further, processor 102, in conjunction with touch-active overlay 114 and controller 112, detects handwritten characters and geometric shapes drawn onto a surface of touchscreen 118 by a stylus or human appendage, e.g., a human finger. By way of example, processor 102 detects an initial location of contact between the stylus or finger and the surface of touchscreen 118, and detects subsequent locations of the stylus or finger as the user draws the characters and geometric shapes on the surface of touchscreen 118. Handwritten characters consistent with the disclosed embodiments include, but are not limited to, Arabic numerals, Latin characters, Chinese characters, Japanese characters, Hebrew characters, Greek characters, Cyrillic characters, and the like. Further, handwritten geometric shapes consistent with the disclosed embodiments include, but are not limited to, lines, circles, semi-circles, and the like.

As an alternate to entering text via a virtual keyboard rendered on display 112, processor 102 can perform image recognition to convert handwritten characters into corresponding text strings, and further, to identify one or more predetermined shapes that can be associated with corresponding outcomes (e.g., a selection of an item displayed within the GUI). Processor 102 can then instruct controller 116 to display combinations of the corresponding text string and the identified shape within one or more portions of the GUI.

While specific embodiments of a touchscreen are described, any suitable type of touchscreen for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the electronic device and its particular application and demands.

Processor 102 also, in some embodiments, interacts with a positioning system 136 for determining a location of electronic device 100. The location is determined in any number of ways, such as by a computer, by a Global Positioning System (GPS), either included or not included in electric device 100, through a Wi-Fi network, or by having a location entered manually. Additionally, or alternatively, the location is determined based on calendar entries.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by processor 102 and are typically stored in memory 110. Additional applications can be loaded onto electronic device 100 through network 150, auxiliary I/O subsystem 124, data port 126, short-range communications subsystem 132, or any other suitable subsystem.

A received signal such as a text message, an e-mail message, an instant message, or a web page download is processed by communication subsystem 104 and this processed information is then provided to processor 102. Processor 102 processes the received information for output to display 112, to auxiliary I/O subsystem 124, or a combination of both. A user can compose data items, for example, e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

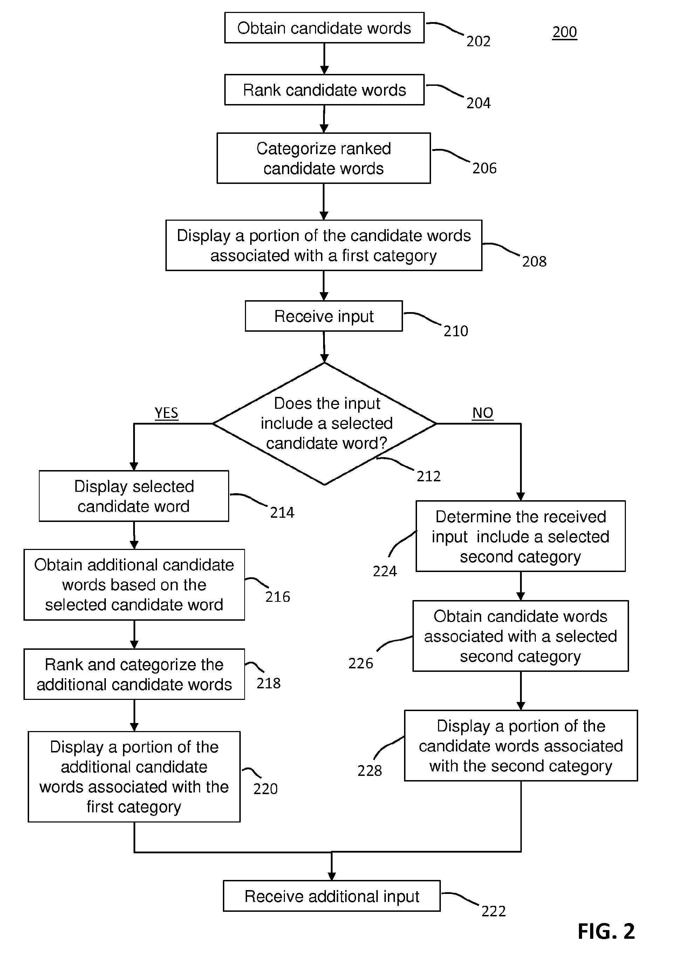

**FIG. 2** is a flowchart of example method 200 for providing predictive text input without character-based input, according to an example embodiment. Example method 200 provides functionality that, in an embodiment, presents a first subset of ranked candidate words within first virtual keyboard displayed by a graphical user interface (GUI) on display 112 of touchscreen 118, selects one of the displayed candidate words based on a first user input, and further, displays a second subset of the ranked candidate words within a second virtual keyboard displayed by the GUI in response to the first user input.

In **FIG. 2**, processor 102 obtains one or more candidate words in step 202. In an embodiment, the obtained candidate words represent a continuum of words that a user might be considering for entry within the GUI, and further, processor 102 can obtain the candidate words without an input of one or more characters by the user via a virtual or conventional keyboard (i.e., a "character-based" input). By way of example, the candidate words can include, but are not limited to, individual words, compound words, phrases, acronyms, names, slang, colloquialisms, abbreviations, or any combination thereof.

In an embodiment, processor 102 leverages data associated with at least one or electronic device 100 or the user to obtain the candidate words. By way of example, processor 102 can access data identifying previously inputted character strings (e.g., stored within memory 110 of **FIG. 1**) and process the accessed data to obtain the candidate words in step 202. Further, for example, processor 102 can access data generated by or associated with one or more application programs executed at electronic device 100 (e.g., word processing files, e-mail contact lists, and stored, and data indicative of browsed web pages stored within memory 110 of **FIG. 1**), which can be processed to yield portions of the candidate words. In some embodiments, the candidate words obtained by processor 102 can include, but are not limited to, a current geographic location of the user or electronic device 100 (e.g., Washington, D.C.) and one or more prior geographic locations of the user or electronic device 100 (e.g., New York, New York, and New Haven, Connecticut).

In some embodiments, processor 102 applies lexical semantic tools to obtain the candidate words in step 202. For example, processor 102 can access dictionary data (e.g., stored within memory 110 of **FIG. 1** or within data repositories communicatively coupled with electronic device 102) and identify additional candidate words that correspond to synonyms of the obtained candidate words. Further, in some implementations, processor 102 parses the obtained candidate words to obtain corresponding roots, and can leverage the accessed dictionary data to obtain additional candidate words that share the corresponding roots. For example, processor 102 can obtain candidate word "determining," identify a corresponding root "determin-," and then obtain additional candidate words that include, but are not limited to, "determined," "determines," "determine," and "determination."

In other embodiments, processor 102 receives the candidate words from an additional component of electronic device 100, or alternatively, from a component disposed remotely from and in communication with electronic device 100. For example, processor 102 can be communicatively coupled to a prediction processor (not depicted in **FIG. 1**), which can generate and provide the candidate words to processor 102. In such embodiments, the prediction processor can be a software- or hardware-based module communicatively coupled to processor 102, and can be either local or remote to electronic device 100 (e.g., disposed at a server in communication with electronic device 100 using various communications protocols). Additionally or alternatively, processor 102 can obtain the candidate words from a data repository disposed remotely from and in communication with electronic device 100 using various communications protocols.

Referring back to **FIG. 2**, processor 102 assigns rankings to the obtained candidate words in step 204. For example, the assigned rankings can reflect a likelihood that a user might select a particular candidate word as an initial textual entry into the GUI, or alternatively, a likelihood that a user might select a particular candidate word as a textual entry after an initial selection of a candidate word. Further, in such embodiments, the assigned rankings can influence a determination of which candidate words to display to a user within the GUI and further, the orientation of the displayed candidate words in the GUI.

In an embodiment, processor 102 assigns rankings to the candidate words based on contextual data associated with at least one of the user or electronic device 100. For example, such contextual data can include information associated with text previously entered by the user. In such implementations, processor 102 can assign rankings to the candidate words based on the a frequency of use (e.g., frequently-used words can be assigned higher rankings than lesser-used words) or similarities in lengths of previously entered words (e.g., a candidate word having a length similar to previously entered words can be assigned higher ranking than a candidate word having a length that diverges sharply from previously entered words). Further, for example, processor 102 can determine a part of speech associated with a previously entered word, and can assign a ranking to subsequent candidate word based on the part of speech (e.g., if the previously entered word were an adjective, a subsequent noun would be assigned a higher ranking than a subsequent verb).

Further, in some implementations, the contextual data can include, but is not limited to, information identifying one or more applications executed by electronic device 100, a geographic location of the user or electronic device 100, demographic data associated with the user, or combinations thereof. For example, if the user executes an e-mail application on electronic device 100, sets of characters associated with that user's e-mail system (e.g., from the user's contact list or address book) can be used to assign a ranking to the candidate words. In such an example, processor 102 can assign higher rankings to candidate words that correspond to proper nouns found in the user's contact list (e.g., names such as "Benjamin" and "Christine") relative to, for example, candidate words that correspond to pronouns (e.g., "him" and "her").

In some implementations, processor 102 leverages a geographic location associated with the user or the electronic device to assign rankings to the candidate words. By way of example, if electronic device 100 recognizes that the user is located at a workplace, then processor 102 can assign higher rankings to candidate words related to work topics than to candidate words more closely associated with leisure activities. Conversely, for example, if the electronic device 100 determines that a user is away from the office (e.g., at an amusement park or shopping mall), then the processor 102 can assign higher rankings to words generally related to leisure activities.

Referring back to **FIG. 2**, processor 102 assigns the ranked candidate words to one or more categories in step 206. For example, processor 102 can assign a predetermined number of the most highly ranked candidate words to a first category (i.e., a "default" category). The predetermined number of candidate words can include, but is not limited to, ten candidate words, twenty candidate words, fifty candidate words, or any additional or alternate number of candidate words appropriate to the GUI. In such implementations, at least a portion of the candidate words assigned to the first category can be displayed in the GUI prior to receiving character-based or word-based input from the user.

Processor 102 also assigns the ranked candidate words to one or more second categories in step 206. For example, the second categories include, but are not limited to, alphabetical categorizations (e.g., based on a first character), categorizations based on the assigned rankings (e.g., percentiles associated with the rankings), categorizations based on contextual relationships between the candidate words and user interests (e.g., hobbies or work-related activities) or an application program executed by electronic device 100 (e.g., an email application, or a word processing application), grammatical categorizations (e.g., parts of speech), or a frequency or timeliness of a prior use of the candidate words (e.g., candidate words previously entered within the past day, week, etc.).

Processor 102 then generates, in step 208, one or more electronic instructions to display information identifying the first category and a first virtual keyboard presenting a first subset of the ranked candidate words assigned to the first category within the GUI, which can be presented on display 112 of touchscreen 118. Additionally, the displayed information can further identify at least a portion of the second categories to which the ranked candidate words are assigned. In such implementations, the GUI can present the ranked candidate words assigned to the first category (e.g., within the first virtual keyboard) without requiring any prior character-based input (e.g., via a virtual character-based keyboard) or prior word-based input (e.g., a selection of a prior candidate word).

In an embodiment, processor 102 selects the first subset of the candidate words for display within the GUI based on the assigned rankings. For example, processor 102 can access a ranked list of the candidate words (e.g., as generated in step 206), and can subsequently select a predetermined number of the highest-ranked candidate words associated with the first category for display in step 208. The predetermined number can include, for example, ten words, twenty words, thirty words, and the like, and can be varied by a user of electronic device 100 or by processor 102 in accordance with a display setting of the GUI.

Further, in an embodiment, the candidate words are presented in the first virtual keyboard of the GUI in a manner that provides a visual indication of the corresponding rankings. For example, the candidate words associated with the first category can be displayed in order of their corresponding rank in the first virtual keyboard (e.g., in columns along a longitudinal axis of the GUI, or alternatively, in rows along a transverse axis of GUI). Additionally or alternatively, highly ranked candidate words can be disposed at positions within the first virtual keyboard that are highly visible to the user (e.g., disposed centrally within a text entry region of the GUI). Further, for example, information identifying the highly ranked candidate words in the first virtual keyboard can be of a color different from information identifying the other candidate words, or alternatively, the information identifying the highly ranked candidate words in the first virtual keyboard can be bolded, underlined, or highlighted in the GUI using any of a number of additional visual effects.

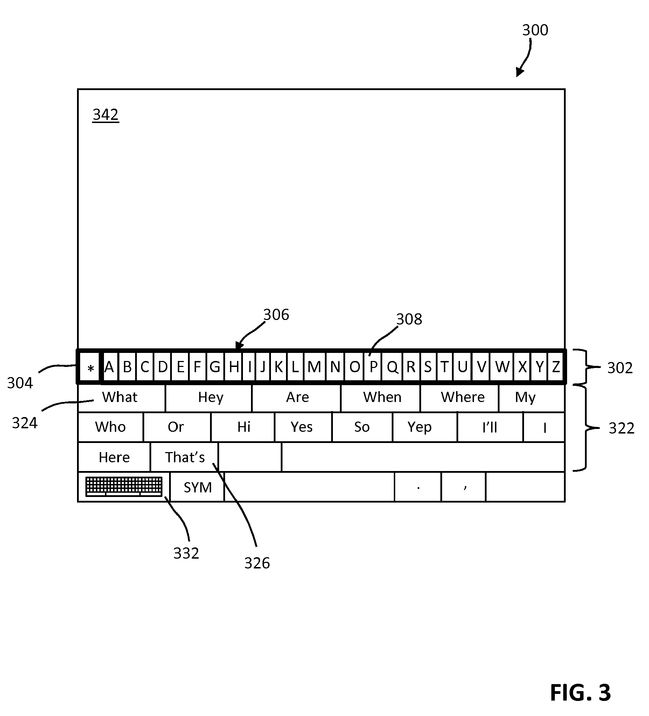

**FIG. 3** illustrates an example of a graphical user interface (GUI) 300, in accordance with an example embodiment. For example, processor 102 of electronic device 100 can display GUI 300 on display 112 of touchscreen 118, and subsequently interact with controller 116 and touch-active overlay 114 to detect contact between a stylus or a human appendage (e.g., finger) and a surface of touchscreen 118. In such embodiments, the detected contact can represent one or more "touch events" indicative of a selection of one or more candidate words displayed within GUI 300, or alternatively, a selection of category displayed within GUI 300.

GUI 300 in **FIG. 3** includes a category region 302, a region 322 that displays a first virtual keyboard presenting candidate words, and a word display region 342. In example GUI 300, region 302 includes an identifier 304 indicative of a first category (i.e., a "default" category indicative of the most highly ranked candidate words), and identifiers 306 associated with corresponding second categories. For example, as illustrated in **FIG. 3**, the second categories correspond to an alphabetical characterization of the ranked candidate words, and each of identifiers 306 is associated with a corresponding character of the Latin alphabet.

The disclosed embodiments are not limited to alphabetical categorizations based on the Latin alphabet, and in additional embodiments, the alphabetical categorizations can be based on any additional alphabet appropriate to the candidate words and a user of electronic device 100, including, but not limited to, Chinese characters, Japanese characters, Hebrew characters, Greek characters, Cyrillic characters, and the like. Furthermore, the disclosed embodiments are not limited to alphabetical categorizations, and in further embodiments, the second categories can reflect categorizations of the ranked candidate words based on at least one of the assigned rankings, contextual relationships between the candidate words and a user interest or an application program, grammatical characteristics of the candidate words, a frequency or timeliness of prior use of the candidate words, or combinations thereof.

Referring back to FIG. 3, the identifiers within category region 302 can be displayed along a transverse axis of GUI 300, and can be disposed in GUI 300 between candidate word region 322 and a display region 342. Alternatively, portions of category identifiers within 302 can be displayed along a longitudinal axis of GUI 300 (or along any other axis of GUI 300), and can be displaced from candidate word region 322 and word display region 342 within GUI 300.

In an embodiment, a size of touchscreen 118 might limit a number of second category identifiers 306 that can be displayed within category region 302. For example, category region 302 within GUI 300 might include first category identifier 304 and second category identifiers 306 associated with five letters (e.g., letters "A," "E," "C," "D," and "E"). In such an implementation, the user can navigate through second category identifiers 306 to view further categories assigned to the candidate words. By way of example, the user can navigate though second category identifiers 306 by "swiping" by a finger or stylus within category region 302, by "tapping" a finger or stylus within predetermined portions of category region 302, and the like.

Referring back to **FIG. 3**, the first virtual keyboard displayed in region 322 of GUI 300 presents a first subset of the candidate words associated with the first category (i.e., the most highly ranked candidate words) and can be displayed to the user without character-based input (e.g., using a virtual keyboard). In such implementations, the candidate words presented in region 322 can be arranged in rows disposed parallel to a transverse axis of GUI 300 and in order of their corresponding assigned rankings. For example, in **FIG. 3**, a ranking assigned to candidate word 324 (i.e., "What") can exceed a ranking assigned to candidate word 326 (i.e., "That's") within candidate word region 322. Although not illustrated in **FIG. 3**, candidate word 342 can be presented in the first virtual keyboard using a color different from that of candidate word 326 to highlight the differences in ranking (e.g., candidate word 342 can be displayed in red, while candidate word 326 can be displayed in black), and additionally or alternatively, candidate word 324 can be visually highlighted in the first virtual keyboard, for example, through bolding, underlining, or its disposition in a visually prominent portion of region 322.

The disclosed embodiments are, however, not limited to such example orientations, and in additional embodiments, the first virtual keyboard in region 322 can present candidate words in columns along a longitudinal axis of GUI 300 (or along any other axis of GUI 300), can arrange candidate words along circumferential circles based on corresponding rankings, or dispose the candidate words in any additional or alternate arrangement appropriate to GUI 300. Further, in additional implementations (not depicted in **FIG. 3**) highly-ranked ones of the candidate words can be visually highlighted (e.g., differentiated by color, underlined, or bolded) or disposed at visually prominent positions within the first virtual keyboard of GUI 300.

Further, in an embodiment, and due to a size of display 112, the first virtual keyboard displayed in region 322 might be able to present only a portion of the candidate words associated with the first category. In such an implementation, the user can navigate through the candidate words assigned to the first category by, for example, "swiping" by a finger or stylus within region 322, by "tapping" a finger or stylus within predetermined portions of region 322, and the like.

Referring back to **FIG. 3**, the user can select one of the displayed candidate words (e.g., candidate word 324) by tapping on a region of the GUI 300 corresponding to the candidate word 324 using a finger or stylus, or by pressing a finger or a stylus on one the region of GUI 300 corresponding to the candidate word 324 for a predetermined period of time. Upon selection of candidate word 324 (i.e., "What"), candidate word 324 can be displayed within word display region 342, and GUI 300 can display a second virtual keyboard presenting a second subset of the candidate words within region 322 that correspond to the selection.

Alternatively, the user might not contemplate entering any of the candidate words assigned to the first category within the first virtual keyboard of GUI 300. In such an embodiment, the user can select one of second category identifiers 306 (e.g., second category identifier 308 corresponding to candidate words starting with the letter "P") by tapping on a region of the GUI 300 corresponding to the second category identifier 308 using a finger or stylus, or by pressing a finger or a stylus on one the region of GUI 300 corresponding to second category identifier 308 for a predetermined period of time.

Upon selection of second category identifier 308, a second subset of the candidate words (e.g., candidate words beginning with the letter "P") can be presented within a second virtual keyboard displayed within region 322 (and as noted above, highly-ranked ones of the "P" candidate words can be visually highlighted to the user or disposed within GUI 300 at a visually prominent position). In such an implementation, the user can select one of the displayed candidate words, or scroll through region 322 to view additional candidate words starting with "P," as described above.

Further, in some embodiments, the user might not contemplate entering a candidate word associated with the first category or any of the second categories. In such an instance, the user can select keyboard indicator 332 by tapping on a region of the GUI 300 corresponding to keyboard indicator 332 using a finger or stylus, or by pressing a finger or a stylus on the region of GUI 300 corresponding to keyboard indicator 332 for a predetermined period of time. Upon selection of keyboard indicator 332, GUI 300 replaces at least a portion of category region 302 and candidate word region 322 with a corresponding virtual character-based keyboard, e.g., a QWERTY keyboard. The user can then enter various combination of characters for displayed within word display region 342 using the virtual character-based keyboard.

Further, in additional embodiments, the user can access the virtual character-based keyboard based on a performance of one or more concurrent or consecutive "touch" events. For example, the user can simultaneously swipe two fingers within a portion of GUI 300, and GUI 300 can then replace at least a portion of category region 302 and the virtual keyboard displayed in region 322 with the virtual character-based keyboard. Additionally or alternatively, GUI 300 can display the virtual character-based keyboard in response to a plurality of touch events performed consecutively within GUI 300 (e.g., a swipe by a finger or stylus within GUI 300 followed by a tap by the finger or stylus). The disclosed embodiments are, however, not limited to such example techniques , and in additional embodiments, the user can access the virtual character-based keyboard using any additional or alternate combination of touch events and non-iconographic processes appropriate to GUI 300.

Referring back to **FIG. 2**, in step 210, processor 102 receives a user input in response to the displayed category information and candidate words (e.g., presented within the first virtual keyboard displayed in GUI 300). By way of example, the input can include a selection of one of the presented candidate words associated with the first category (e.g., candidate word 324 of **FIG. 3**), or alternatively, the input can include a selection of one of the identifiers associated with the second alphanumeric categories (e.g., second category identifier 308 in **FIG. 3**). Further, in additional embodiments, the input can be indicative of a request by the user to display a virtual character-based keyboard, e.g., a QWERTY keyboard, facilitating character-by-character entry of words into the GUI.

In step 212, processor 102 determines whether the received input includes a selection of one of the candidate words presented in the first virtual keyboard (e.g., candidate word 324 of **FIG. 3**). If processor 102 determines in step 212 that the received input includes a selection of a candidate word, then in step 214, processor 102 can generate one or more electronic instructions to display the selected candidate word within a corresponding region of the GUI (e.g., word display region 342 of GUI 300 in **FIG. 3**).

In step 216, processor 102 selects a second subset of the candidate words based on the selected candidate word. The second subset of the candidate words can, in an embodiment, represent words that the user might consider entering into the GUI after the selected candidate word, and as described above, the additional candidate words can include, but are not limited to, individual words, compound words, phrases, acronyms, names, slang, colloquialisms, abbreviations, or any combination thereof. Further, as described above in reference to step 202, processor 102 obtains the second subset of the candidate words using data associated with at least one or electronic device 100 or the user (e.g., contextual data, etc.).

Processor 102 then assigns rankings to the second subset of the candidate words and categorizes the ranked candidate words in step 218. As described above, the assigned rankings can reflect a likelihood that a user might select a particular additional candidate word for entry into the GUI after the selected candidate word. In such embodiments, and as described above in reference to step 204, processor 102 assigns rankings to the second subset of the candidate words based on contextual information associated with at least one of the user or electronic device 100, which can include, but is not limited to, information identifying one or more applications in use by the user, a geographic location of the user, demographic data associated with the user, or combinations thereof.

Further, in an embodiment, and as described above in reference to step 206, processor 102 assigns one or more of the most highly ranked of the second subset of the candidate words to the first category, and can assign portions of the second subset of the candidate words to corresponding ones of the second categories. As described above, the additional categories include, but are not limited to alphabetical categorizations, categorizations based on the assigned rankings, categorizations based on a contextual relationship with a user interest or an application program, grammatical categorizations, or a frequency or timeliness of a prior use of the additional candidate words.

In step 220, processor 102 generates one or more electronic instructions to display information identifying the first category and a second virtual keyboard presenting at least a portion of the second subset of the candidate words assigned to the first category within the GUI (e.g., GUI 300 of FIG. 3). As described above, GUI 300 can also identify at least a portion of the second categories to which the ranked candidate words are assigned (e.g., second identifiers 306 of **FIG. 3B**). Upon display of the second virtual keyboard in step 220, example method 200 passes step 222, and processor 102 awaits further input from the user.

If, however, processor 102 determines in step 212 that the received input fails to include the selected candidate word, then processor 102 determines in step 224 that the received input includes a selection of one of the second categories. For example, and as described above in reference to **FIG. 3**, the user can select one of the second category identifiers within the GUI (e.g., additional category identifier 308 of **FIG. 3**). In such an embodiment, processor 102 determines in step 224 that the received input includes information identifying the selected second category, and in step 226, processor 102 obtains a second subset of the candidate words corresponding to the selected second category. By way of example, the selected second category can correspond to candidate words starting with the letter "P" (e.g., as represented by second category identifier 308 in **FIG. 3**) and in step 226, processor 102 obtains the second subset of the ranked candidate words starting with the letter "P" that were previously assigned to the selected second category in step 206, as described above.

Once processor 102 obtains the candidate words assigned to the selected second category in step 226, processor 102 generates one or more electronic instructions in step 228 to display information identifying the selected second category and a second virtual keyboard presenting at least a portion of the second subset of the candidate words, which includes those candidate words assigned to the selected second category within the GUI (e.g., GUI 300 of **FIG. 3**). Example method 200 then passes back to step 222, and processor 102 awaits further input from the user.

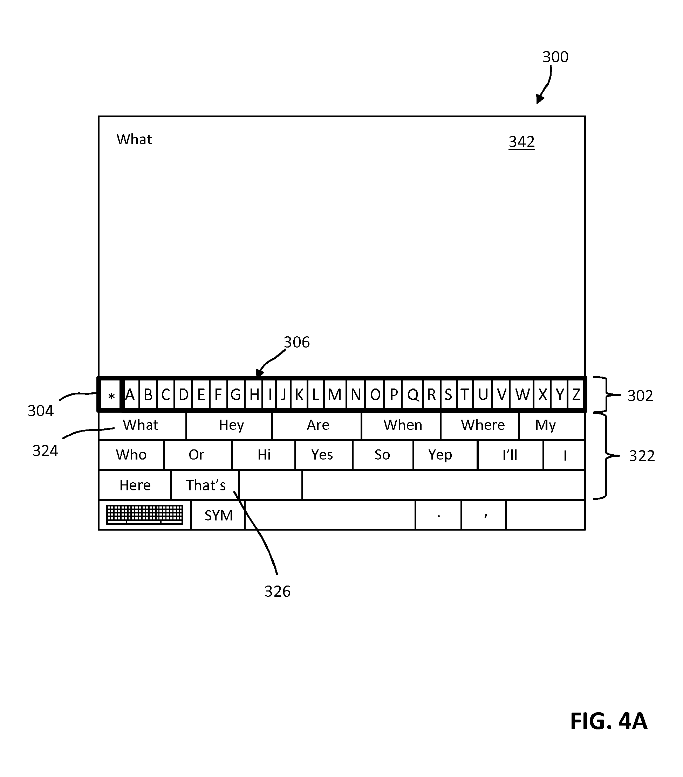

Using the embodiments described above, a graphical user interface (GUI) can present predicted textual entries (e.g., candidate words) to a user without requiring character-based input, and the user can navigate through the candidate words and select one of the candidate words for entry in the GUI. In such embodiments, the GUI reduces a cognitive load imposed on the user by facilitating the navigation and selection of candidate words without requiring character input through a conventional or virtual keyboard. **FIGs. 4A-4D** illustrate examples of a graphical user interface (GUI) 300 that enables a user to navigate and select one or more ranked and categorized candidate words without character-based input, in accordance with an example embodiment.

In **FIG. 4A**, a user accesses graphical user interface (GUI) 300 using electronic device 100, and GUI 300 displays a first virtual keyboard presenting a first subset of ranked candidate words to the user in region 322. In an embodiment, the candidate words represent potential user entries into GUI 300, and the rankings assigned to the candidate words reflect a likelihood that a user might select a particular candidate word for entry into GUI 300. Furthermore, the candidate words presented by the first virtual keyboard in region 322 are associated with a first category (e.g., represented by first category identifier 304) and as described above, include a portion of the most highly ranked candidate words.

The user can view the candidate words displayed within region 322 and select one of the displayed candidate words for entry into GUI 300. In an embodiment, the candidate words presented by the first virtual keyboard within region 322 represent only a portion of those candidate words assigned to the first category, and if the user does not identify a desired entry among the presented candidate words, then the user can obtain additional candidate words associated with the first category by "swiping" by a finger or stylus within region 322, by "tapping" a finger or stylus within region 322, and the like.

By way of example, the user might contemplate inputting the word "What" as an entry into GUI 300, and the user can select candidate word 324 for entry into GUI 300. In such implementations, the user can select candidate word 324 by tapping on a region of the GUI 300 corresponding to candidate word 324 using a finger or stylus, or by pressing a finger or a stylus on one the region of GUI 300 corresponding to the candidate word 324 for a predetermined period of time. Upon selection of candidate word 324 (i.e., "What"), processor 102 can generate one or more electronic instructions to display the selected candidate word "What" within word display region 342 of GUI 300, as illustrated in **FIG. 4A****.**

Upon selection of candidate word 324, and as described above, processor 102 can select a second subset of the candidate words that might represent the user's subsequent textual entry into GUI 300 (e.g., an entry that could follow "What"). In such implementations, processor 102 obtains and ranks the second subset of the candidate words based on contextual data associated with the user or electronic device, which includes, but is not limited to, data indicate of previously entered text strings and words. Further, as described above, processor 102 assigns the second subset of the candidate words to a plurality of categories, which include the first category (e.g., represented by first category identifier 304) corresponding to the most highly ranked of the candidate words and one or more second categories (e.g., represented by second category identifiers 306) corresponding to, for example, alphabetical categorizations of the candidate words.

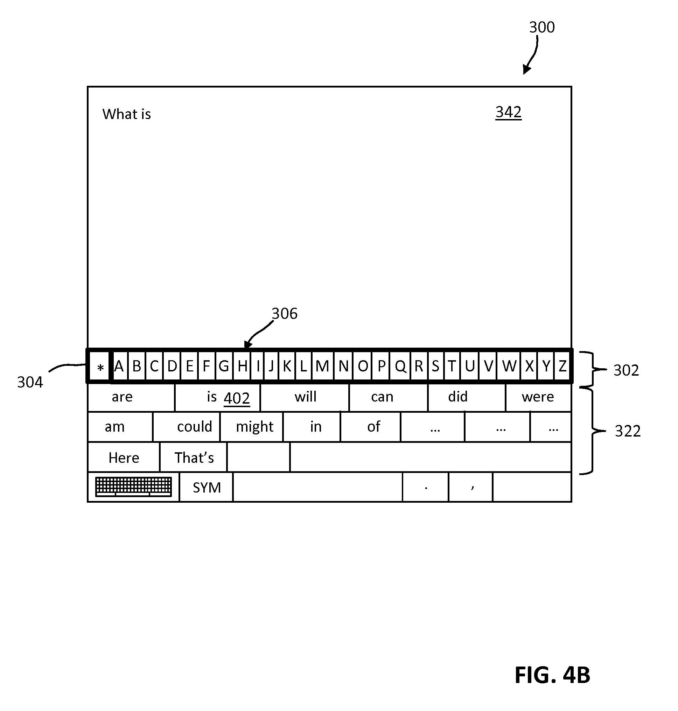

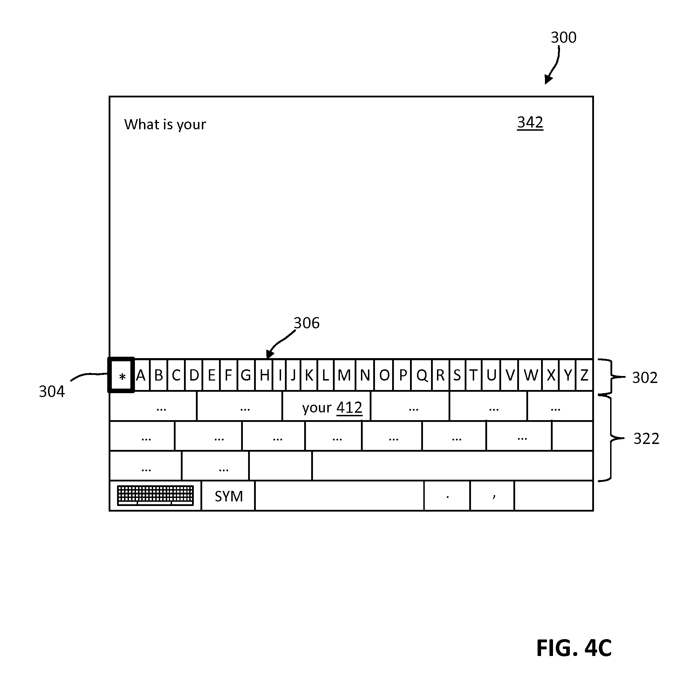

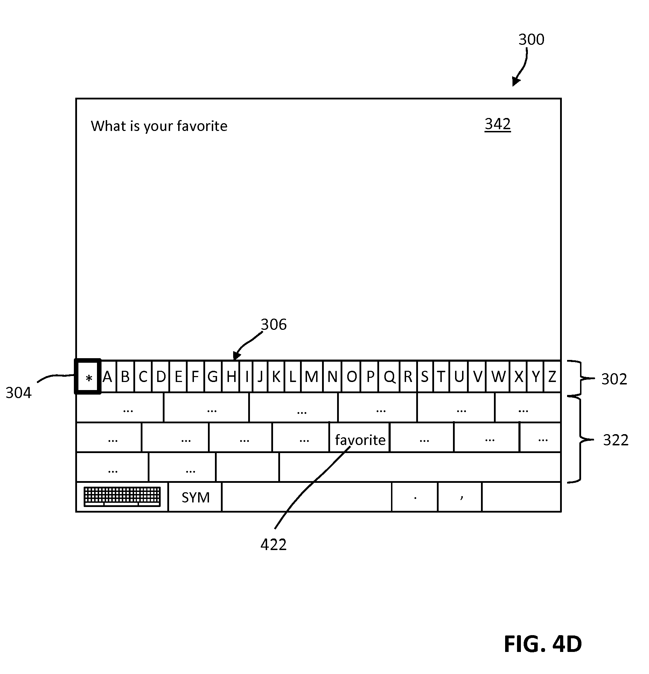

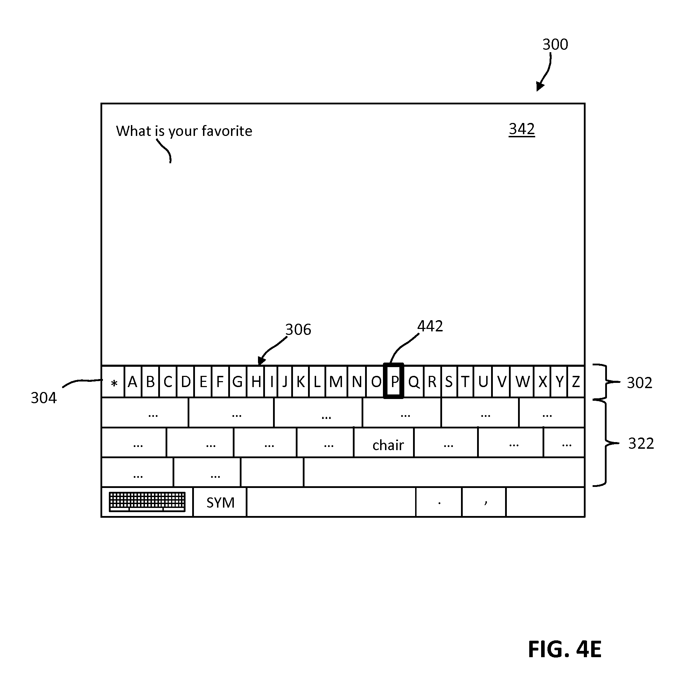

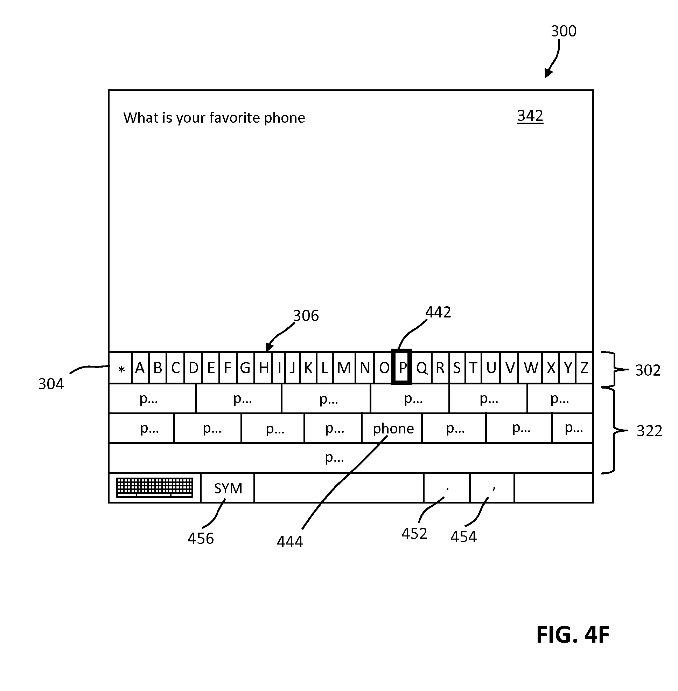

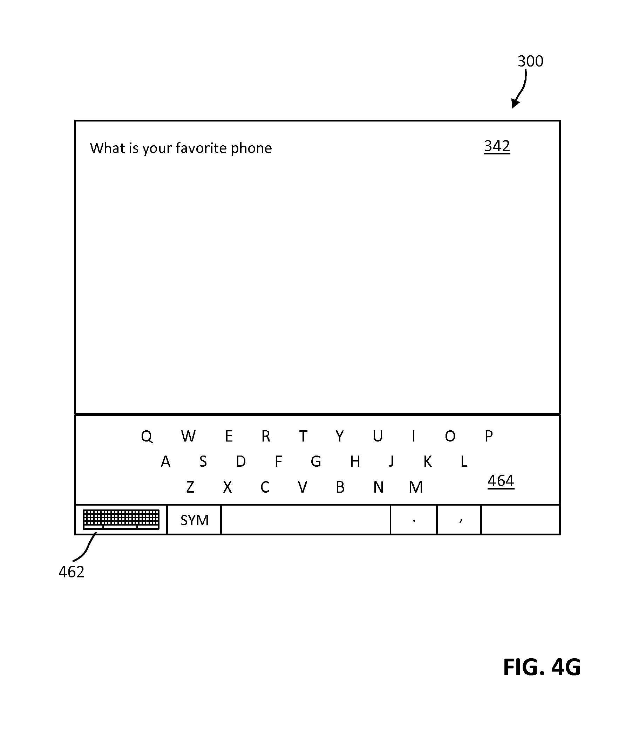

As illustrated in **FIG. 4B**, the user can review the additional candidate words presented by a second virtual keyboard in region 322, and can select one of the additional candidate words for entry into GUI 300 and subsequent display in word display region 342. For example, the user can select word 402 (i.e., "is") by tapping on a region of the GUI 300 corresponding to candidate word 402 using a finger or stylus, or by pressing a finger or a stylus on one the region of GUI 300 corresponding to the candidate word 402 for a predetermined period of time. Upon selection of candidate word 402, processor 102 can generate one or more electronic instructions to append the selected candidate word "is" to the previously entered word "What," as illustrated in **FIG. 4****B.**

Upon selection of candidate word 402, processor 102 can obtain a third subset of the candidate words that might represent the user's subsequent textual entry into GUI 300 (e.g., an entry that follows the previously entered "What is"). As described above, processor 102 obtains and ranks the third subset of the candidate words based on contextual data associated with the user or electronic device, which includes, but is not limited to, data indicate of previously entered text strings and words. Further, as described above, processor 102 assigns rankings to the third subset of the candidate words indicative of a likelihood that the candidate words might be entered into GUI 300 subsequent to the previously entered text "What is," and then assigns the ranked candidate words to a plurality of categories (e.g., the first category and one or more second categories).

The user can review the third subset of the candidate words presented by a third virtual keyboard in region 322 of **FIG. 4C**, and can select one of the candidate words for display in word display region 342 subsequent to the previously entered and displayed "What is." For example, in **FIG. 4C**, the user can select candidate word 412 (i.e., "your") by tapping on a region of the GUI 300 corresponding to candidate word 412 using a finger or stylus, or by pressing a finger or a stylus on one the region of GUI 300 corresponding to the candidate word 412 for a predetermined period of time. In such embodiments, the disposition of candidate word 412 at a visually prominent position within region 322 indicates a high ranking assigned to candidate word 412. Upon selection of candidate word 412, processor 102 can generate one or more electronic instructions to append the selected candidate word "your" to previously entered words "What is," as illustrated in **FIG. 4C**.

Similarly, upon selection of candidate word 412, processor 102 can obtain a fourth subset of the candidate words that might represent a subsequent textual entry into GUI 300 by the user (e.g., an entry that follow the previously entered "What is your"), and the fourth subset of the candidate words can be assigned rankings and subsequently categorized, as described above. Processor 102 can then generate one or more electronic instructions to display a portion of the fourth subset of the candidate words corresponding to the first category within a fourth virtual keyboard in region 322 of GUI 30, as illustrated in **FIG. 4D**.

In **FIG. 4D**, the user can review and if needed, navigate or scroll through the candidate words presented within region 322 of GUI 300 to select a candidate word for entry subsequent to previously entered words "What is your." For example, the user may identify candidate word 422 as the next desired entry, and the user can select candidate word 422 by tapping on a region of the GUI 300 corresponding to candidate word 422 using a finger or stylus, or by pressing a finger or a stylus on one the region of GUI 300 corresponding to the candidate word 422 for a predetermined period of time. Upon selection of candidate word 422 (i.e., "favorite"), processor 102 can generate one or more electronic instructions to append the selected candidate word "favorite" to previously entered words "What is your" within word display region 342, as illustrated in **FIG. 4D**.

As described above, upon selection of candidate word 422, processor 102 can obtain a fifth subset of candidate words that might represent the user's next textual input into GUI 300, and the obtained candidate words can be assigned rankings and subsequently categorized, as described above. Processor 102 can then generate one or more electronic instructions to display a portion of the ranked candidate words corresponding to the first category within a fifth virtual keyboard in region 322 of GUI 300, as illustrated in **FIG. 4E**.

In FIG. **4E**, the user can navigate or scroll through the candidate words presented within region 322 of GUI 300 in an attempt to identify a word to follow previously entered words "What is your favorite." The user might, however, be unable to locate the desired word within the displayed candidate words. For example, the user may be drafting a text message describing a subject that the user rarely, if ever, described in previously drafted text messages or email messages. In such an embodiment, GUI 300 provides the user with an opportunity to access candidate words associated with one or more of the second categories (e.g., represented by second category identifiers 306).

By way of example, the desired word may be "phone," which might not be associated with the first category and might not be displayed in candidate word region 322 of GUI 300. In such an embodiment, the user can select second category identifier 442 to access ranked candidate words that start with the letter "P." As described above, the user can select second category 442 by tapping on a region of the GUI 300 corresponding to second category 442 using a finger or stylus, or by pressing a finger or a stylus on one the region of GUI 300 corresponding to the additional category 442 for a predetermined period of time. Upon selection of second category 442, processor 102 can obtain a sixth subset of the ranked candidate words that start with the letter "P," and can displayed a sixth virtual keyboard presenting a portion of the sixth subset of the ranked candidate words within region 322 of GUI 300, as described in reference to **FIG. 4F**.

For example, in **FIG. 4F**, the user can navigate through candidate words displayed within region 322 (e.g., by "swiping" by a finger or stylus within region 322, by "tapping" a finger or stylus within region 322, and the like), and can identify candidate word 444 that corresponds to the desired input of "phone." The user can then select candidate word 444 by tapping on a region of the GUI 300 corresponding to candidate word 444 using a finger or stylus, or by pressing a finger or a stylus on one the region of GUI 300 corresponding to the candidate word 444 for a predetermined period of time. Upon selection of candidate word 444 (i.e., "phone"), processor 102 can generate one or more electronic instructions to append the selected candidate word "phone" to previously entered words "What is your favorite" within word display region 342, as illustrated in **FIG. 4F**.

Further, in some implementations, the user might be satisfied with the words displayed in word display region 342 of GUI 300 (e.g., "What is your favorite phone"), and the user might subsequently select punctuations marks 452 (i.e., a period) or 454 (i.e., a comma) for display in word display region 342. Additionally or alternatively, the user might select "SYM" region 456 to display information identifying additional symbols and punctuation marks (e.g., a question mark) that could be selected by the user for display within word display region 342.

In some embodiments, the user may navigate through candidate words associated with default category 304 and one or more of additional categories 306, but may be unable to identify a candidate word that corresponds to the user's desired input. For example, in **FIG. 4G**, the user might have previously entered the phrase "What is your favorite phone," but might be unable to identify a candidate word that corresponds to the user's next desired input of "retailer." In such an embodiment, the user can select keyboard indicator 462 (e.g., by "tapping" a finger or stylus within region of GUI 300 corresponding to keyboard indicator 462), and processor 102 can generate one or more electronic instructions to display a virtual QWERTY keyboard 464 within GUI 300. The user can then enter various combination of characters for display within display region 342 using virtual QWERTY keyboard 464, and further, upon completion of character-based input, the user can select keyboard indicator 462 again to hide virtual QWERTY keyboard 464 and revert back to word-based input (e.g., as described above in reference to **FIGs. 4A-4F**).

In the embodiment of **FIG. 4G**, virtual QWERTY keyboard 464 can replace regions 302 and 322 within GUI 300. The disclosed embodiments are not limited to such example orientations, and in further embodiments, virtual QWERTY keyboard 464 can be disposed within GUI 300 at a spatial position that coincides with one or more of regions 302 and 322, or alternatively, that overlaps a portion of display region 342.

In the example embodiments described above, reference is made to a stylus that contacts a surface of a display of a touchscreen. The disclosed example embodiments are not limited to a stylus, and in additional embodiments, the user can enter characters and other handwritten input into the text entry region of the display using a finger or any additional tool capable of contacting the surface of touchscreen 118 and being recognized by touch-sensitive overlay 114.

Further, in these example embodiments, reference is made to a first category (e.g., represented by first category indicator 304 of **FIG. 3**) to which one or more highly ranked candidate words are assigned. The disclosed embodiments are, however, not limited to such exemplary categories, and in further embodiments, processor 102 can assign ranked candidate words to any additional or alternate first or default category appropriate to the candidate words (e.g., a first category based on a contextual relationship between the candidate words with an activity of interest of the user or an application program executed by the user, based on grammatical characteristics of the potential candidate, or based on a frequency or timeliness of prior use of the candidate words).

In these example embodiments, reference is also made to candidate words assigned to second categories (e.g., represented by second category indicators 306 of **FIG. 3**), and further, to displaying candidate words associated with a selected one of the second categories (e.g., second category 442 of **FIGs. 4E-4F** corresponding to candidate words beginning with "P"). In further embodiments, a particular one of the second categories may not be associated with any candidate words, or alternatively, may not be associated with a threshold number of candidate words. For example, a selected one of second categories 306 (e.g., a second category associated with "X") might be associated with a single candidate word (e.g., "X-ray"). In such embodiments, rather than displaying a single candidate word, processor 102 may generate instructions to display a virtual keyboard presenting candidate words associated with one or more of the second categories whose indicators 306 are disposed adjacent to the indicator of the selected second category. In such implementations, upon selecting the additional category associated with "X," processor 102 can generate instructions to display not only "X-ray" within region 322, but also candidate words that start with the letters "W" and "Y."

Further, in the example embodiments described above, reference is made to second categories associated with discrete, predetermined portions of a continuum of candidate words. By way of example, and in reference to the alphabetical categorization of **FIGs. 4E-4F**, each of the second categories corresponds to a specific letter of the Latin alphabet (e.g., second category 442 corresponding to candidate words beginning with "P), or alternatively, to a predetermined number of letters of the Latin alphabet (e.g., candidate words beginning with "W," "X," and "Y" when an insufficient number of candidate words begin with "X"). The disclosed embodiments are not limited to such associations, and in additional embodiments, each of the second categories can be associated with a continuum of candidate words of variable size.

For example, using the alphabetical categorization of **FIGs. 4E-4F**, each of the second categories might correspond not to a specific letter, but to a particular "area" of the alphabet. In such embodiments, a user can establish contact between a finger or stylus and a surface of touchscreen 118 within a portion of a graphical user interface (e.g., GUI 300 of FIG. 3), and the contacted portion of GUI 300 can include second category indicators (e.g., second category indicators 306 of **FIG. 3**) corresponding to the letters "L," "M," "N," "O," and "P." Processor 102 can then generate instructions to display candidate words that start with the letters "L," "M," "N," "O," and "P" in a corresponding virtual keyboard within of GUI 300 (e.g., within region 322 of **FIG. 3**).

Furthermore, the number of letters within the particular alphabetical area can vary in accordance with a size of touchscreen 118, as an overlap between selected category indicators in a small touchscreen might be larger than a corresponding overlap in larger touchscreen. Thus, an alphabetical area selected using a smaller touchscreen may include a larger number of letters (e.g., the letters "L-M-N-O-P") than a corresponding alphabetical area associated with a larger touchscreen (e.g., the letters "L-M," "L-M-N," and "N-O-P"). The disclosed embodiments are, however, not limited to such exemplary combinations of letters, and in additional embodiments, the alphabetical areas may include any additional or alternate number of combination of letters appropriate to touchscreen 118 and GUI 300.

Embodiments and all of the functional operations described in this specification can be implemented in digital electronic circuitry, or in computer software, firmware, or hardware, including the structures disclosed in this specification and their structural equivalents, or in combinations of them. Embodiments can be implemented as one or more computer program products, i.e., one or more modules of computer program instructions encoded on a computer readable medium, e.g., a machine readable storage device, a machine readable storage medium, a memory device, or a machine readable propagated signal, for execution by, or to control the operation of, data processing apparatus.

The processes and logic flows described in this specification (e.g., **FIG. 3**) can be performed by one or more programmable processors executing one or more computer programs to perform functions by operating on input data and generating output. The processes and logic flows can also be performed by, and apparatuses can also be implemented as, special purpose logic circuitry, e.g., a field programmable gate array (FPGA) or an application specific integrated circuit (ASIC).

Certain features which, for clarity, are described in this specification in the context of separate embodiments, can also be provided in combination in a single embodiment. Conversely, various features which, for brevity, are described in the context of a single embodiment can also be provided in multiple embodiments separately or in any suitable sub-combination. Moreover, although features can be described above as acting in certain combinations and even initially claimed as such, one or more features from a claimed combination can in some cases be excised from the combination, and the claimed combination can be directed to a subcombination or variation of a subcombination. Additionally, particular embodiments have been described. Other embodiments are within the scope of the following claims.

## Claims

1. A method for an electronic device, comprising:
obtaining a set of candidate words without character-based input;
displaying a first virtual keyboard presenting a first subset of the candidate words and information identifying a plurality of categories associated with the candidate words, the first subset of the candidate words being associated with a first one of the categories;
receiving a first input reflecting a selection of a second one of the
categories;
selecting a second subset of the candidate words based on the received input; and
displaying, in response to the selection, a second virtual keyboard presenting the second subset of the candidate words.

2. The method of claim 1, further comprising assigning rankings to the obtained candidate words based on at least one of usage data, contextual information, or demographic information.

3. The method of claim 2, further comprising displaying information identifying the rankings assigned to at least one of the first or second subsets of the candidate words.

4. The method of claim 2, further comprising assigning the candidate words to the first one of the categories based on the assigned rankings.

5. The method of claim 2, further comprising assigning the candidate words to second ones of the categories, the categories comprising at least one of an alphabetical categorization, a categorization based on the assigned rankings, a categorization based on a contextual relationship, a categorization based on a grammatical characteristic of the candidate words, or a categorization based on a prior usage of the candidate words.

6. The method of claim 1, wherein the first input comprises a first selection of one of the first subset of the candidate words presented within the first virtual keyboard.

7. The method of claim 6, further comprising:
displaying the first selected candidate word; and
selecting the second subset of the candidate words based on the first selected candidate word.

8. The method of claim 7, further comprising:
receiving a second input indicative of a second selection of one of the second subset of the candidate words; and
appending the second selected candidate word to the first selected candidate word.

9. The method of claim 7, further comprising displaying information identifying the selected second category when the received input comprises the selected second category, wherein the second subset of the candidate words correspond to the selected second category.

10. The method of claim 1, further comprising:
receiving a second input comprising a request to display a virtual character-based keyboard; and
in response to the second input, displaying the virtual character-based keyboard on a display of the electronic device.

11. An electronic device comprising:
a display;
a memory storing one or more instructions; and
a processor configured to execute the one or more instructions to perform the steps of any one of claims 1 to 10.

12. A non-transitory computer readable medium comprising executable instructions to provide predicted words for textual input, the executable instructions comprising the steps of any one of claims 1 to 10.
